# EUROPÄISCHE PATENTSCHRIFT

(11) **EP 2 527 667 B1**
(45) Veröffentlichungstag und Bekanntmachung des Hinweises auf die Patenterteilung: **01.03.2017**
(21) Anmeldenummer: 12168162.1
(22) Anmeldetag: 16.05.2012
(51) Int. Cl.: F16B 19/00, F16B 13/02, F16B 13/12

(54) **Dübel**
Dowel
Cheville

(30) Priorität: 26.05.2011 DE 202011101115 U
(43) Veröffentlichungstag der Anmeldung: 28.11.2012
(73) Patentinhaber: BTS BauTechnischeSysteme GmbH & Co. KG, 45731 Waltrop (DE)
(72) Erfinder: Sawatzki, Günter, 48249 Dülmen (DE)
(74) Vertreter: Meinke, Dabringhaus und Partner GbR

(56) Entgegenhaltungen:
- DE-A1- 19 603 063
- DE-A1- 19 621 986
- DE-C- 830 715
- DE-U1- 8 536 615

## Beschreibung

Die Erfindung betrifft einen Dübel mit einem einen Längsschlitz aufweisenden Schaft, einem Schaftkopf und einem schlitzfreien kreisförmigen Dübelbereich zwischen dem Schaftkopf und dem Schaft, wobei der Schaft oder zumindest ein Teil des Schaftes querschnittlich ovalförmig ausgebildet ist.

Dübel mit einem einen Längsschlitz aufweisenden Schaft sind bekannt und werden in Bohrungen eingebracht, deren Innenmaß geringfügig kleiner als der Außendurchmesser des Dübels ist, d.h. der Dübel ist im Durchmesser größer als das Bohrloch, in dem er verarbeitet wird. Der Längsschlitz dient unter anderem dazu, eine gewisse Verformung quer zur Einschlagrichtung im Falle eines Einschlagdübels zu ermöglichen. Bekannt sind sowohl Dübel, bei denen der Schaft über seine wesentliche Länge mit einem Längsschlitz versehen ist, wobei der Schlitz vor dem Kopf des Dübels endet, als auch Dübel, die einen zusätzlichen schlitzfreien Bereich zwischen Längsschlitz und Kopf des Dübels aufweisen. Zum Stand der Technik zählt zum Beispiel die DE 196 21 986 A1, DE 39 00 985 C2 oder die DE 76 17 619 .

Der Schaft hat zumeist eine zylindrische Form. Bei der Verarbeitung des Dübels, d.h. beim Einschlagen des Dübels, wird dieser verbogen und der Schaft erhält dabei eine ovale Form.

Dies hat den Nachteil, dass die Mantelfläche des Dübels nur punktuell an der Innenfläche der Bohrung anliegt, so dass keine optimale Flächenpressung erzielt wird.

Ein weiterer Nachteil ergibt sich bei Dübeln, die mit einer rauen Oberfläche versehen sind. Diese raue Oberfläche wird beim Einschlagen an den punktuellen Stellen zerstört, da die Flächenpressung an diesen Stellen zu groß ist. Hierbei wird der Dübel regelrecht in Einschlagsrichtung der Länge nach abgeschabt.

Ein Dübel mit den Merkmalen des Oberbegriffes des Patentanspruches 1 ist aus den Druckschriften DE 196 03 063 A1 und DE 85 36 615 U1 bekannt. Bei beiden Dübeln bzw. Nägeln ist ein freiendseitiger Schaftbereich mit einem Schlitz vorgesehen, dessen Querschnitt über die Schlitzlänge veränderlich ist und von der Kreisform abweicht oder ovalförmig ausgebildet ist. Durch diesen unrunden ovalförmigen Querschnitt liegt dieser Schaftbereich des jeweiligen Dübels großflächig im Bohrloch an, was zu einer besseren Flächenpressung führt.

Aus DE 830 715 C ist ein dübelartiges Element ohne Schaftkopf bekannt, welches über seiner Länge einen Längsschlitz und einen unrunden ovalförmigen Querschnitt aufweist.

Es ist Aufgabe der Erfindung, einen Dübel der eingangs genannten Art bei Beibehaltung einer optimalen Flächenpressung so zu verbessern, dass ein nachträgliches Einbringen einer Schraube möglich ist..

Diese Aufgabe wird mit den Merkmalen des Anspruches 1 gelöst. Vorteilhafte Ausgestaltungen der Erfindung ergeben sich aus den Unteransprüchen.

Die Erfindung sieht vor, dass der Schaft oder zumindest ein Teil des Schaftes querschnittlich ovalförmig ausgebildet ist. Untersuchungen haben ergeben, dass hierdurch der Schaft beim Einschlagen in ein zylindrisches Bohrloch derart verformt wird, dass er großflächig im Bohrloch anliegt. Hierdurch wird wiederum eine optimale Flächenpressung erreicht. Auch wird hierdurch die Flächenpressung derart verringert, dass eine raue Oberfläche eines Schaftes beim Einschlagen nicht zerstört wird. Dabei ist durch die erfindungsgemäße Sollbruch-stelle angrenzend an den Schaftkopf gewährleistet, dass eine Sollbruchstelle einen Bruch genau vor dem Längsschlitz erzeugen kann, so dass eine Schraube wirkungsvoll angesetzt werden kann.

Häufig ergibt sich auch die Notwendigkeit, den Dübel zu lösen. Hierzu eignen sich die aus dem Stand der Technik bekannten Halbrundköpfe von Dübeln nicht, da diese für Werkzeuge keine Ansatzmöglichkeiten bieten. Eine praktikable Variante der Erfindung sieht daher vor, dass auf der dem Schaft abgewandten Seite des Kopfes eine ebene Fläche ausgebildet ist. Hierdurch ist gewährleistet, dass beispielsweise ein Bohrer zum Aufbohren des Dübels angesetzt werden kann. Auf einem üblichen Halbrundkopf würde der Bohrer unkontrolliert abrutschen.

Eine weitere vorteilhafte Ausgestaltung der Erfindung sieht vor, dass der Schaft oder zumindest ein Teil des Schaftes eine aufgeraute Oberfläche aufweist. Die Oberflächenrauigkeit ist dabei vorzugsweise durch Erodieren hergestellt. Der Vorteil einer aufgerauten Oberfläche ist darin zu sehen, dass die Auszugskräfte des Dübels stark anwachsen.

Im Folgenden wird die Erfindung anhand der Zeichnungen näher erläutert. Es zeigt in schematischer Darstellung:
- Fig. 1a: eine Seitenansicht des Dübels gemäß der Erfindung,
- Fig. 1b: eine Schnittansicht des Dübels aus Fig. 1a entlang des Schnittes X aus Fig. 1a,
- Fig. 1c: eine Schnittansicht des Dübels aus Fig. 1a entlang des Schnittes A-A aus Fig. 1a mit eingezeichneter Sollbruchstelle,
- Fig. 2: eine Seitenansicht des Dübels mit aufgerauter Oberfläche gemäß der Erfindung,
- Fig. 3a - 3f: Schnittansichten mit verschiedenen Schlitzformen des Dübels aus Fig. 1a entlang des Schnittes X aus Fig. 1a und
- Fig. 4: Vergleich der Schnittansichten des Dübels aus Fig. 1a entlang des Schnittes A-A inner- und außerhalb des Bohrlochs.

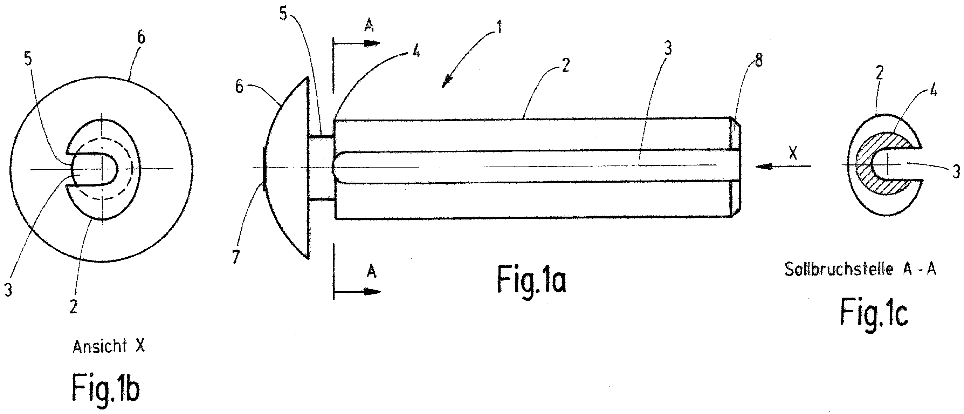

Fig. 1a zeigt einen Dübel gemäß der Erfindung, der mit dem Bezugszeichen 1 versehen und vorzugsweise aus Kunststoff ist.

Der Dübel 1 ist als Einschlagdübel ausgebildet und umfasst einen Schaft 2, der einen Längsschlitz 3 aufweist. Der Längsschlitz 3 erstreckt sich längs des Schaftes 2.

Der Dübel 1 weist weiterhin, wie aus Fig. 1a hervorgeht, einen Schaftkopf 6 auf, der auf seiner dem Schaft 2 abgewandten Seite eine ebene Fläche 7 aufweist. Zwischen Schaftkopf 6 und Schaft 2 ist ein kreisförmiger Dübelbereich 5 ausgebildet, der schlitzfrei und leicht versetzt zum Schaft 2 ausgebildet ist. An dem dem halbkreisförmigen Kopf zugewandten Ende des Schaftes 2 ist die Sollbruchstelle 4 ausgebildet.

An dem freien Ende des Schaftes 2 ist eine Fase 8 ausgeformt, die vorzugsweise < 45° ist.

Im Gegensatz zu dem kreisförmigen Dübelbereich 5 ist der Schaft 2, wie Fig. 1b zeigt, ovalförmig ausgebildet. Da der Dübelbereich 5 im Gegensatz zu dem Schaft 2 kreisförmig ist, weist die in Fig. 1c als schraffierte Fläche gezeigte Sollbruchstelle 4 einen kreisförmigen Umfang auf.

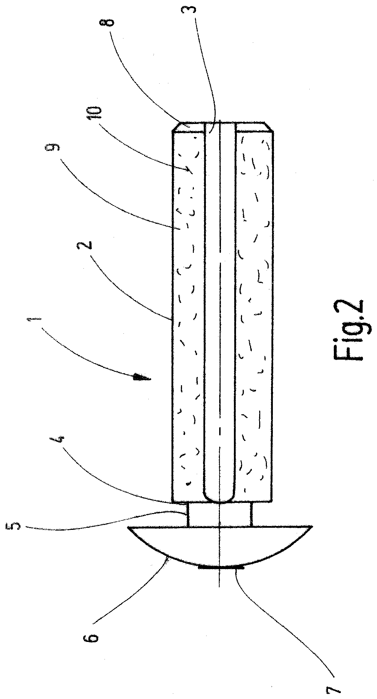

Des Weiteren ist die Oberfläche des Schaftes 2, wie Fig. 2 verdeutlicht, mit einer Vielzahl von Erosionen 10 versehen, so dass sich eine kontinuierliche Aufrauung auf der gesamten aufgerauten Oberfläche 9 des Schaftes 2 ergibt.

Auf die Federwirkung und somit auch auf die Klemmwirkung des in Fig. 1a gezeigten Dübels 1 übt das Material des Dübels 1 einen nicht unerheblichen Einfluss aus. Dies bedeutet, dass Kunststoffe mit unterschiedlichen Festigkeiten verschiedene Klemm- bzw. Federwirkungen hervorrufen können, wobei der Grad der Materialansammlungen neben sowie unterhalb des Längsschlitzes 3 und die damit einhergehende Schlitzform eine wichtige Einflussgröße darstellt.

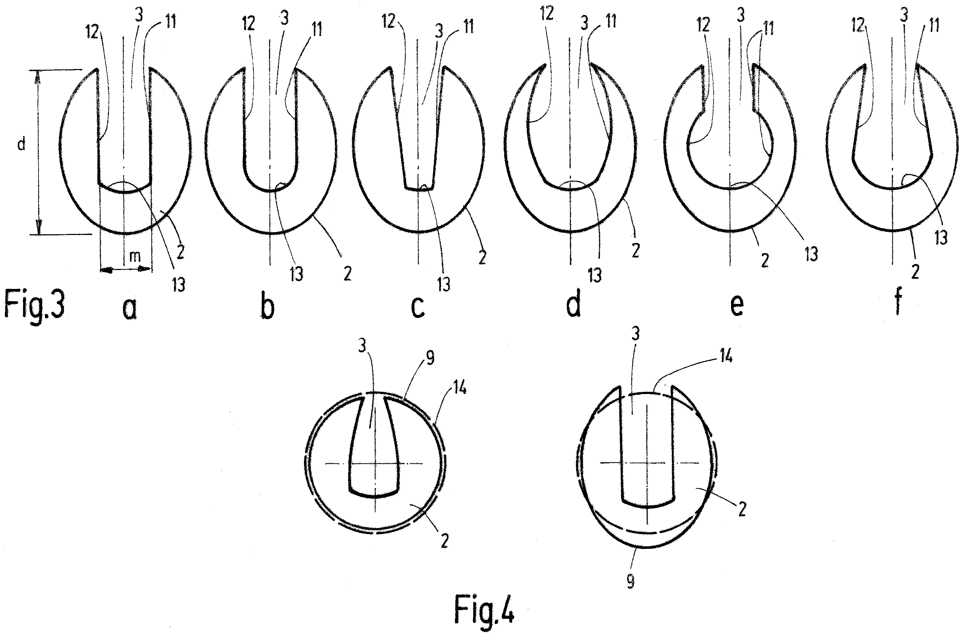

In den Fig. 3a - 3f sind daher verschiedene Formen des Längsschlitzes 3 des Schaftes 2 gezeigt. Der ovalförmige Schaft 2 ist gemäß Fig. 3a vorzugsweise gekennzeichnet durch den Außendurchmesser d des Schaftes 2 und die Breite m des Schlitzes 3.

Der rechteckige Längsschlitz 3, der an seinem unteren Ende 13 leicht oder stärker gerundet sein kann (Fig. 1a, Fig. 1b) kann eine geometrische Änderung erfahren, indem seine Seitenwände 11, 12, eine gerade und/oder gebogene Form annehmen und dabei gleichzeitig einen zueinander konvergierenden bzw. divergierenden Verlauf nehmen (Fig. 1c - 1f). Durch diese konstruktive Maßnahme wird erreicht, dass sich insbesondere neben den Seitenwänden 11, 12, Materialansammlungen geringerer Stärke ausbilden, mit der erwähnten Wirkung einer größeren Klemm- bzw. Federwirkung.

Als besonders vorteilhaft hat sich überdies ein Verhältnis Außendurchmesser d des Schaftes 2 zu Breite m des Schlitzes 3 von ca. 2,5 erwiesen.

Fig. 4 gibt zu erkennen, dass der Schaft 2 vor dem Eindringen in das Bohrloch 14 dem Bohrloch 14 nicht angepasst ist. Erst nach Eindringen, d.h. nach einem Einschlag des in Fig. 1a gezeigten Dübels 1 in das Bohrloch 14, verformt sich der ovalförmige Schaft 2 derart, dass er großflächig, d.h. mit seiner Oberfläche 9, im Bohrloch 14 anliegt.

### Bezugszeichenliste:

- 1: Dübel
- 2: Schaft
- 3: Längsschlitz
- 4: Sollbruchstelle
- 5: Dübelbereich
- 6: Schaftkopf
- 7: ebene Fläche
- 8: Fase
- 9: Oberfläche
- 10: Erosionen
- 11, 12: Seitenwände
- 13: unteres Ende des Längsschlitzes
- 14: Bohrloch

## Patentansprüche

1. Dübel (1) mit einem einen Längsschlitz (3) aufweisenden Schaft (2), einem Schaftkopf (6) und einem schlitzfreien kreisförmigen Dübelbereich (5) zwischen dem Schaftkopf (6) und dem Schaft (2), wobei der Schaft (2) oder zumindest ein Teil des Schaftes (2) querschnittlich ovalförmig ausgebildet ist,
**dadurch gekennzeichnet,**
**dass** unterhalb des Schaftkopfes (6) eine Sollbruchstelle (4) ausgebildet ist.

2. Dübel nach Anspruch 1,
**dadurch gekennzeichnet,**
**dass** auf der dem Schaft (2) abgewandten Seite des Schaftkopfes (6) eine ebene Fläche (7) ausgebildet ist.

3. Dübel nach Anspruch r2,
**dadurch gekennzeichnet,**
**dass** das dem Schaftkopf (6) gegenüberliegende freie Ende des Schaftes (2) mit einer Fase (8) versehen ist.

4. Dübel nach einem der vorhergehenden Ansprüche,
**dadurch gekennzeichnet,**
**dass** der Schaft (2) oder zumindest ein Teil des Schaftes (2) eine aufgeraute Oberfläche (9) aufweist.

5. Dübel nach Anspruch 4,
**dadurch gekennzeichnet,**
**dass** die Oberflächenrauigkeit durch Erodieren hergestellt ist.

6. Dübel nach einem der vorhergehenden Ansprüche,
**dadurch gekennzeichnet,**
**dass** das Verhältnis Außendurchmesser d des Schaftes (2) zu Breite m des Längsschlitzes (3) zwischen 2,0 und 3,0 beträgt.

7. Dübel nach Anspruch 6,
**dadurch gekennzeichnet,**
**dass** das Verhältnis zwischen 2,2 und 2,8 beträgt.

8. Dübel nach Anspruch 7,
**dadurch gekennzeichnet,**
**dass** das Verhältnis 2,5 beträgt.

## Claims

1. Dowel (1) having a shaft (2) that has a longitudinal slot (3), a shaft head (6) and a slot-free, circular dowel region (5) between the shaft head (6) and the shaft (2), wherein the shaft (2) or at least one part of the shaft (2) is formed to be oval-shaped in cross-section, **characterised in that** a predetermined breaking point (4) is formed under the shaft head (6).

2. Dowel according to Claim 1, **characterised in that** a flat surface (7) is formed on the side of the shaft head (6) facing away from the shaft (2).

3. Dowel according to Claim 2, **characterised in that** the free end of the shaft (2) lying opposite the shaft head (6) is provided with a chamfer (8).

4. Dowel according to any one of the preceding claims, **characterised in that** the shaft (2) or at least one part of the shaft (2) has a roughened surface (9).

5. Dowel according to Claim 4, **characterised in that** the surface roughness is produced by eroding.

6. Dowel according to any one of the preceding claims, **characterised in that** the ratio of the outer diameter d of the shaft (2) to the width m of the longitudinal slot (3) is between 2.0 and 3.0.

7. Dowel according to Claim 6, **characterised in that** the ratio is between 2.2 and 2.8.

8. Dowel according to Claim 7, **characterised in that** the ratio is 2.5.

## Revendications

1. Cheville (1) avec une tige (2) comportant une fente longitudinale (3), avec une tête de tige (6) et avec une zone de cheville (5) circulaire et exempte de fente entre la tête de tige (6) et la tige (2), la tige (2) ou au moins une partie de la tige (2) étant conçue avec une section transversale ovale,
**caractérisée en ce qu'**un point destiné à la rupture (4) est conçu en dessous de la tête de tige (6).

2. Cheville selon la revendication 1, **caractérisée en ce qu'**une surface plane (7) est conçue sur le côté, éloigné de la tige (2), de la tête de tige (6).

3. Cheville selon la revendication 2, **caractérisée en ce que** l'extrémité libre, à l'opposé de la tête de tige (6), de la tige (2) est munie d'un biseau (8).

4. Cheville selon l'une des revendications précédentes, **caractérisée en ce que** la tige (2) ou au moins une partie de la tige (2) a une surface (9) rugueuse.

5. Cheville selon la revendication 4, **caractérisée en ce que** la rugosité de surface est obtenue par érosion.

6. Cheville selon l'une des revendications précédentes, **caractérisée en ce que** le rapport du diamètre extérieur d de la tige (2) à la largeur m de la fente longitudinale (3) est compris entre 2,0 et 3,0.

7. Cheville selon la revendication 6, **caractérisée en ce que** le rapport est compris entre 2,2 et 2,8.

8. Cheville selon la revendication 7, **caractérisée en ce que** le rapport est égal à 2,5.
